# EUROPÄISCHE PATENTSCHRIFT

(11) **EP 1 709 389 B1**
(45) Veröffentlichungstag und Bekanntmachung des Hinweises auf die Patenterteilung: **30.10.2013**
(21) Anmeldenummer: 05700699.1
(22) Anmeldetag: 05.01.2005
(51) Int. Cl.: G01B 5/004, G01B 21/04

(54) **MESSSYSTEM ZUM GEOMETRISCHEN VERMESSEN EINES WERKSTÜCKES**
MEASURING SYSTEM FOR GEOMETRICALLY MEASURING A WORKPIECE
SYSTEME DE MESURE GEOMETRIQUE D'UNE PIECE D'USINAGE

(30) Priorität: 26.01.2004 DE 102004003864
(43) Veröffentlichungstag der Anmeldung: 11.10.2006
(73) Patentinhaber: Carl Zeiss Industrielle Messtechnik GmbH, 73447 Oberkochen (DE)
(72) Erfinder: SCHWARZ, Wolfgang, 73540 Heubach (DE)
(74) Vertreter: Geyer, Fehners & Partner
(86) Internationale Anmeldenummer: PCT/EP2005/000036
(87) Internationale Veröffentlichungsnummer: WO 2005/071350

(56) Entgegenhaltungen:
- EP-A- 1 128 156
- WO-A1-03/014655
- DE-A1- 3 620 118
- DE-A1- 3 637 410
- DE-A1- 10 122 080
- DE-C1- 4 300 762

## Beschreibung

Die Erfindung bezieht sich auf ein Verfahren und ein Meßsystem zum geometrischen Vermessen eines Werkstückes, wobei ein Koordinatenmeßgerät und ein Drehtisch verwendet werden und das Koordinatenmeßgerät bei der Vermessung eine Raumform des auf dem Drehtisch angeordneten Werkstücks abfühlt.

Drehtische werden in Meßsystemen zunehmend für Koordinatenmeßgeräte eingesetzt, da sich dann bestimmte Meßaufgaben mit Hilfe der durch den Drehtisch bereitgestellten vierten, rotatorischen Achse, um die das Werkstück gedreht werden kann, leichter durchführen lassen. Insbesondere sind dabei oftmals Meßaufgaben mit ein und derselben Tastakonfigaration des Koordinatenmeßgerätes lösbar, wohingehend ohne Drehtisch verschiedene Taststifte am Tastkopf verwendet werden müßten. Für einen erfolgreichen Einsatz eines Meßsystems mit einem Drehtisch ist jedoch erforderlich, daß die vom Drehtisch eingestellten Winkelwerte, d. h. die Drehung des Werkstücks um die rotatorische Achse und Lage der rotatorischen Achse möglichst exakt idealen Gegebenheiten, d. h. konstruktiven Vorgaben entsprechen; ansonsten wäre der Meßfehler des Meßsystems vergrößert.

Die DE 3 637 410 C2 erwähnt diesbezüglich verschiedene Möglichkeiten, einen Drehtisch zu kalibrieren und insbesondere die Laufabweichungen der Drehachse in Form von axialer Abweichung, radialer Abweichung und Taumelabweichung mittels eines auf dem Drehtisch plazierten Prüfkörpers unter Zuhilfenahme des Koordinatenmeßgerätes zu bestimmen. Damit werden Korrekturen möglich, die den Meßfehler eines Meßsystems mit Drehtisch herabsetzen.

Meßsysteme mit Koordinatenmeßgeräten wurden ursprünglich vorwiegend in speziellen Meßlabors meist in Entwicklungsabteilungen eingesetzt. Mittlerweile werden sie aber in steigender Anzahl direkt in der Fertigung von zu überprüfenden Gegenständen eingesetzt und beispielsweise mit Bearbeitungsmaschinen zu einem flexiblen Fertigungssystem verkettet. In solchen Umgebungen ist, anders als in reinen Meßlabors, oftmals mit einem die Meßgenauigkeit negativen beeinflussenden Temperaturgang zu rechnen.

Die DE 36 31 825 A1 schlägt deshalb eine entsprechende Klimatisierungskammer für ein Koordinatenmeßgerät vor, die sicherstellt, daß das Koordinatenmeßgerät gleichmäßig temperiert ist. Dabei wird nicht versucht, eine möglichst exakte Temperatur einzustellen; stattdessen wird die Temperatur in der Kammer gemessen und ein dazu passender Korrekturdatensatz aus zuvor ermittelten, temperaturabhängigen Korrekturdatensätzen ausgewählt. Eine ähnlich temperaturabhängige Korrektur sieht auch die DE 36 20 118 C2 vor, die Temperatureinflüsse hinsichtlich Längenänderung des vermessenen Werkstücks und der am Koordinatenmeßgerät eingesetzten Maßstäbe vornimmt. Dieses Konzept wird in DE 101 38 138 A1 weitergebildet, die die Abweichung der aktuellen Betriebstemperaturen zu einer Bezugstemperatur bestimmt und dadurch bewirkte Längenänderung eines Taststiftes des Koordinatenmeßgerätes berechnet und bei der Gewinnung der Meßwerte an einem Meßobjekt berücksichtigt. In der WO 03/014655 werden Temperaturabhängig Gewichte in dem Kalibrierungen verändert.

Die drei letztgenannten Druckschriften befassen sich also damit, temperaturbewirkte Fehler an einem Koordinatenmeßgerät zu korrigieren. Die DE 37 29 644 C2 verfolgt hier einen anderen Ansatz, da gemäß der dort offenbarten Lehre eine Messung nur dann durchgeführt wird, wenn ein am Werkstück angebrachter Temperaturfühler eine innerhalb eines zulässigen Bereiches liegende Temperatur anzeigt. Die Temperatur des Werkstücks wird dort deshalb berücksichtigt, weil es vorkommen kann, daß das Werkstück infolge eines gerade durchlaufenden Fertigungsprozesses (beispielsweise durch Wasch- oder Trocknungsvorgänge) erwärmt oder abgekühlt sein kann. Die Temperaturmessung verhindert also, daß durch ein zu warmes oder kaltes Werkstück eine unzulässige Verfälschung auftritt. Die Temperatur des Koordinatenmeßgerätes und eventuell dadurch verursachte Meßfehler werden von der DE 37 29 644 C2 nicht angesprochen.

EP 1128156 A1 offenbart ein Messsystem zum geometrischen Vermessen eines Werkstückes mittels eines Koordinatenmessgerätes und eines Drehtisches, wobei Temperaturen verschiedener Elemente gemessen werden.

Aus DE 10122080 ist weiterhin bekannt, einen Drehtisch auf einem Koordinatenmessgerät zu kalibrieren, wobei ein Referenzobjekt auf dem Drehtisch vermessen wird. Hierbei wird darauf hingewiesen, dass sich die Achse des Drehtisches zeitlich aufgrund von Temperatureinflüssen ändert.

Bei einem in einem Fertigungsbereich integrierten Messsystem mit Koordinatenmessgerät und Drehtisch geben die im Stand der Technik bekannten Korrekturverfahren keine Lösung.

Der Erfindung liegt deshalb die Aufgabe zugrunde, ein Verfahren bzw. ein Messsystem der eingangs genannten Art derart weiterzubilden, dass auch in einem Fertigungsbereich mit vergleichsweise hohen Temperaturschwankungen eine exakte Messung mit möglichst geringem Aufwand möglich ist.

Diese Aufgabe wird gelöst mit einem Verfahren gemäß dem unabhängigen Anspruch 1 oder dem unabhängigen Anspruch 2.

Bei den erfindungsgemäßen Verfahren wird zum geometrischen Vermessen eines Werkstücks ein Koordinatenmessgerät und ein Drehtisch verwendet. Das Koordinatenmessgerät fühlt bei der Vermessung die Raumform des auf dem Drehtisch angeordneten Werkstück ab. Die weiteren Merkmale der erfindungsgemäßen Verfahren sind in den Ansprüchen 1 und 2 definiert.

Die Aufgabe wird ebenfalls gelöst durch ein Messsystem gemäß unabhängigem Anspruch 7. Das erfindungsgemäße

Meßsystem zum geometrischen Vermessen eines Werkstückes weist ein Koordinatenmeßgerät und einen Drehtisch auf, wobei das Koordinatenmeßgerät ein Steuergerät aufweist, das ausgebildet ist, die erfindungsgemäßen Verfahren auszuführen.

Erfindungsgemäß wird also die aktuelle Temperatur zum Zeitpunkt der Messung berücksichtigt und bei außerhalb eines gewissen Zulässigkeitsbereichs liegenden Temperaturbedingungen entweder eine direkte vollständige Neukallbrierung des Meßsystems vorgenommen oder zumindest eine Teil-Kalibrierung in Form eines besonderen Korrekturmechanismusses unter Berücksichtigung eines auf dem Drehtisch angeordneten Referenzobjekten ausgeführt.

Welche der beiden Erfindungsvarianten zu Anwendung kommt, kann von der erforderlichen beziehungsweise gewünschten Meßgenauigkeit abhängig gemacht werden. Eine Kalibrierung des Drehtisches direkt vor einer Messung führt naturgemäß zu geringeren Meßfehlern. Die Erfindungsvanante mit vollständiger Neukalibrierung wird deshalb für Präzisionsanwendungen zu bevorzugen sein, wobei natürlich der Grenzwert d. h. die Temperaturabweichung, ab der eine Neukalibrierung vor der Vermessung des Werkstücks durchgeführt wird, auch einen gewissen Einfluß auf den Meßfehler hat. Es ist deshalb zu bevorzugen, den Grenzwert so zu wählen, daß bei Temperaturschwankungen innerhalb des Grenzwertes eine Soll-Meßgenauigkeit eingehalten wird.

Für die Erfindungsvariante mit Neukalibrierung ist die Abspeicherung einer Bezugstemperatur bei der letztmaligen Kalibrierung des Meßsystems wesentlich. Erst dadurch kann überprüft werden, ob das Meßsystem im aktuellen Zustand hinreichend genau dem kalibrierten Zustand entspricht. Gleichzeitig wird durch die Erfindung diese Überprüfung mit einer überraschend einfachen Messung möglich; es muß lediglich die Temperatur erfaßt werden. Aufwendige Präftsionsüberprüfungen der Meßgenauigkeit des Meßsystems sind nicht nötig. Die Abspeicherung der Bezugstemperatur bei der Kalibrierung und der erfindungsgemäße Vergleich der aktuellen Betriebstemperatur des Meßsystems direkt vor der Messung liefert somit eine verblüffende einfache Möglichkeit, den Meßfehler innerhalb spezifizierter Grenzen zu halten.

Da, wie bereits erwähnt, die Temperaturabhängigkeit von Meßfehlern, die durch den Drehtisch verursacht werden, gar nicht oder nur sehr aufwendig mathematisch zu beschreiben ist, wird die Temperatur des Drehtisches erfaßt. Es ist dabei natürlich hinsichtlich der Genauigkeit der Temperaturmessung von Vorteil, wenn die Temperaturmessung immer an der gleichen Stelle des Meßsystems erfolgt.

Für Anwendungen mit geringeren Genauigkeitsanforderungen ist oftmals eine vollständige Kalibrierung des Meßsystems verzichtbar. Für solche Anwendungen ist die zweite Erfindungsvariante vorgesehen, die ebenfalls die Temperatur des Drehtisches berücksichtigt, jedoch bei einer außerhalb der im Anspruch 2 vorgegebenen Temperaturbedingung nur eine Teil-Kalibrierung des Meßsystems vornimmt, und dazu ein vor der Messung des Werkstückes bereits erfaßtes Referenzobjekt nach der Werkstückabfühlung noch einmal abtastet. Anstelle der alle Parameter des Meßgerätes berücksichtigten Kalibrierung tritt also bei zweiten Erfindungsvariante eine Vermessung eines geeigneten Referenzobjektes, das sich auf dem Drehtisch befindet. Diese Erfindungsvariante kommt also mit weniger Kalibrieraufwand aus.

Bei vielen Meßaufgaben läßt sich am Werkstück ein Referenzelement mit eingrenzbarem Förmfehler finden, das als Referenzobjekt dienen kann. In einem solchen Fall fungiert ein Element des Werkstückes selbst als Referenzobjekt, so daß auf externe Referenzobjekte verzichtet werden kann. Idealerweise liegt das Referenzobjekt in größerer Höhe über der Auflage des Drehtisches, da damit temperaturbedingte Drehtischfehler besonders gut erfaßt werden können.

Um sowohl translatorische als auch rotatorische Abweichungen des Drehtisches vom Idealverhalten mit möglichst wenig Messungen erfassen zu können, ist es bevorzugt, daß die Abfühlung das Referenzobjekt mit und ohne Betätigung des Drehtisches erfaßt, wobei aus den Meßwerten bei Abfühlung ohne Drehtischbetätigung eine Korrektur für eine translatorische Abweichungen, aus den Meßwerten bei Abfühlung mit Drehtischbetätigung eine Korrektur für eine Radialabweichung oder eine Taumelabweichung bestimmt wird. Vorzugsweise wird bei der Abfühlung mit Drehtischbetätigung an mindestens zwei, idealerweise vier Winkelpositionen des Drehtisches eine Messung vorgenommen, d. h. die Messung erfordert nicht zwingend eine kontinuierliche Bewegung des Drehtisches, obwohl eine solche natürlich unter dem Gesichtspunkt einer optimalen Korrektur vorteilhaft ist.

Möchte man die Erfindung für Meßaufgaben mit wechselten Werkstücken einsetzen, läßt sich meist kein Element am Werkstück definieren, daß dann als Referenzobjekt dienen könnte. Deshalb ist es für solche Anwendungen bevorzugt, daß das Referenzobjekt ein an einem Werkstückträger angebrachter Prüfkörper ist. Beispielsweise kann es sich um einen an Meßpaletten, auf denen Werkstücke angeordnet werden, fest angebrachtes Vergleichselement handeln, insbesondere eine Kugel, die in einem bestimmten Abstand über der Ebene der Drehtischauflage liegt.

Die beiden Erfindungsvarianten, d. h. die vollständige Neukalibrierung des Drehtisches bei Temperaturbedingungen, die um mehr als ein zulässiges Maß von den Temperaturbedingungen der letzten Kalibrierung abweichen, und die Teil-Kalibrierung mit Vermessung eines Referenzobjektes im Falle bestimmter Temperaturabweichungen während der Werkstückmessung, können natürlich auch kombiniert werden, um in einem quasi mehrstufigen Verfahren je nach Temperaturbedingungen beziehungsweise Änderung der Temperaturbedingung während der Messung entweder eine Vermessung des Referenzobjektes oder gleich eine vollständige Kalibrierung des Drehtisches vorzunehmen. Es ist deshalb vorgesehen, daß vor der Vermessung des Meßstückes die Temperatur des Drehtisches erfaßt wird und eine Abweichung zu einer Referenztemperatur, die bei einer Kalibrierung des Drehtisches vorlag, bestimmt wird, und bei einer einen Grenzwert überschreitenden Differenz vor der Messung des Objektes eine Neukalibrierung des Drehtisches vorgenommen wird. Ändert sich während der Werkstückmessung die Temperatur um mehr als den Schwellwert, wird zusätzlich eine Teil-Kalibrierung vorgenommen. Der Schwellwert ist dann also vorzugsweise kleiner als der Grenzwert.

Die Erfindung wird nachfolgend unter Bezugnahme auf die Zeichnung beispielhalber noch näher erläutert. In den Zeichnungen zeigt:
- Fig. 1: ein Meßsystem mit einem Koordinatenmeßgerät und einem Drehtisch in vereinfachter perspektivischer Darstellung,
- Fig. 2: ein Ablaufdiagramm bei der Ausführung einer Messung mit dem Meßsystem der Fig. 1,
- Fig. 3 und Fig. 4: Referenzmessungen vor der Vermessung eines Werkstückes und
- Fig. 5 und Fig. 6: Referenzmessungen nach der Vermessung eines Werkstückes.

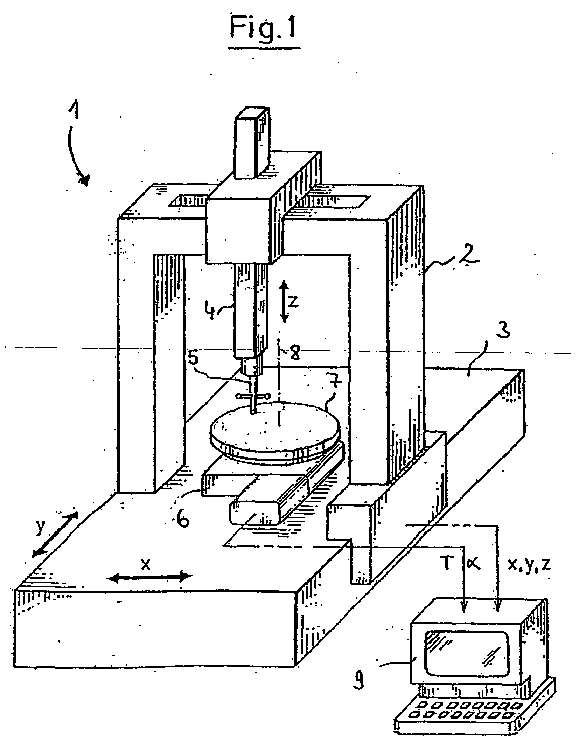

Figur 1 zeigt ein Meßsystem für Werkstücke, das ein Koordinatenmeßgerät 1 umfaßt, welches in der vorliegenden Ausführungsform als Portalmeßgerät ausgebildet ist. Dabei ist ein Portal 2 vorgesehen, daß auf einer Basis 3 entlang einer mit y bezeichneten Achse verschiebbar ist. Das Portal 2 trägt eine Pinole 4, die am Portal entlang einer senkrecht zur y-Richtung liegenden x-Richtung verschiebbar ist. Die Pinole 4 kann entlang ihrer Pinolen achse in einer senkrecht zur x- und y-Richtung liegenden z-Richtung verstellt werden. An der Spitze der Pinole 5 befindet sich ein Taster 6, bestehend aus einem Tastkopf mit darin angebrachtem Taststift, der an seiner Spitze eine Tastkugel trägt. Zum Vermessen eines Werkstückes wird die Tastkugel nun durch dreiachsige Verstellungen des Koordinatenmeßgerätes 1 über die Oberfläche des Werkstückes unter Anlage mit einer bestimmten Kraft geführt. Die Koordinaten der Tastkugel werden durch geeignete Erfassung der Stellung von Portal und Pinole ermittelt und stellen nach geeigneten Korrekturen die Koordinaten des vermessenen Werkstückes dar.

Auf der Basis 3 des Koordinatenmeßgerätes 1 befindet sich eine Drehtischeinheit 6, die einen Drehteller 7 aufweist. Der Drehteller 7 ist um eine Achse 8 drehbar, so daß ein auf dem Drehteller 7 angeordnetes, zu vermessendes Werkstück entsprechenden um die Achse 8 drehbar ist.

Das Meßsystem weist weiter ein Steuergerät 9 auf, das sowohl mit dem Koordinatenmeßgerät 1 als auch der Drehtischeinheit 6 verbunden ist und entsprechende Koordinaten, d. h. die x- die y- und die z- Koordinaten des Koordinatenmeßgerätes sowie die Winkelstellung α der Drehtischeinheit 6 einliest und daraus die entsprechenden Meßwerte bei der geometrischen Vermessung eines Werkstückes erzeugt. Weiter weitet das Steuergerät 9 noch die Temperatur T der Drehtischeinheit 6 aus, die von einem an der Drehtischeinheit 6 vorgesehenen Temperaturfühler angezeigt wird. Alternativ kann auch eine externe Temperaturmeßeinheit verwendet werden, die über geeignete leitungsgebundene oder funkgestützte Datenverbindungen eine Temperaturmeßwert an das Steuergerät 9 überträgt. Natürlich steuert das Steuergerät 9 auch den Betrieb des Koordinatenmeßgerätes 1 und der Drehtischeinheit 6.

Zum Vermessen eines Werkstückes wird mit dem Meßsystem in einer ersten Ausführungsform eine Kalibrierung der Drehtischeinheit 6 durchgeführt. Dazu kann beispielsweise das in der DE 36 374 10 C2 offenbarte Verfahren verwendet werden, bei dem verschiedene Prüfkörper auf den Drehteller 7 gelegt und vermessen werden. Die Kalibrierung liefert einen Satz Korrekturparameter, mit den Abweichungen der Drehtischeinheit hinsichtlich der angezeigten Winkelstellung α oder Laufabweichung der Drehachse, insbesondere der axialer, radialer oder Taumel-Abweichung, aus den Meßwerten herauskorrigiert werden können. Zusammen mit derart erhaltenen Korrekturparametern wird die Temperatur T als Bezugstemperatur abgelegt. Vorzugsweise sorgt man dabei während der Kalibrierung für eine ausreichende Temperaturkonstantheit, beziehungsweise speichert Korrekturparameter nur dann ab, wenn während der Kalibrierung ausreichende Temperaturkonstantheit, d. h. ein unter einer Obergrenze liegender Temperaturgradient gegeben ist.

Vor der Messung eines Werkstückes wird nun die Temperatur T der Drehtischeinheit 6 erneute gemessen und mit der Bezugstemperatur verglichen. Sollte die Differenz einen bestimmten Grenzwert überschreiten, wird vor der Messung des Werkstückes eine erneute Kalibrierung durchgeführt.

In der zweiten Ausführungsform der Erfindung wird ebenfalls vor der Messung eines Werkstückes die Temperatur T des Drehtisches 6 erfaßt. Anschließend wird ein Referenzobjekt, daß sich auf dem Drehtisch 7 befindet vermessen. Beim Referenzobjekt kann es sich entweder um ein auf den Drehtisch 7 liegendes Referenzelement des Werkstückes oder um ein eigenständiges Referenzelement handeln. Das Referenzelement wird dabei einmal ohne Betätigung der Drehtischeinheit 6 und ein weiteres mal mit Betätigung der Drehtischeinheit 6 abgefühlt.

Anschließend wird das auf dem Drehteller 7 liegende Bauteil vermessen. Danach wird die Temperatur T zum Ende der Messung des Bauteils erfaßt. Liegt die Differenz oberhalb eines bestimmten Schwellwertes überschritten, wird das Referenzobjekt erneut vermessen, wiederum einmal mit und einmal ohne Betätigung der Drehtischeinheit 6.

Aus den so erhaltenen Meßwerten des Referenzobjektes vor und nach Vermessung des Werkstückes jeweils mit und ohne Betätigung der Drehtischeinheit werden Korrekturwert bestimmt, die es erlauben den Grenzwert temperaturbedingten Meßfehler weitgehend zu bereinigen. Dies wird später noch näher anhand eines dritten Ausführungsbeispiels erläutert.

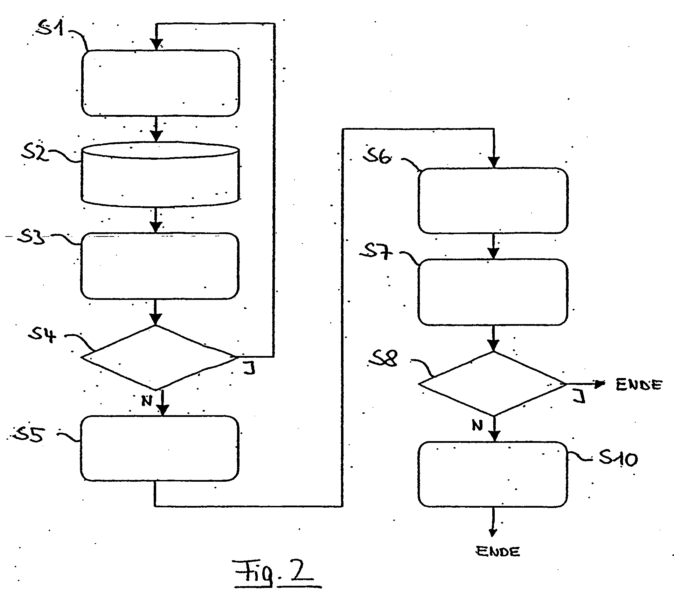

In einem dritten Ausführungsbeispiel werden die Vorgehensweisen des ersten und des zweiten Ausführungsbeispiels zusammengefaßt; der dabei im System unter Steuerung des Steuergerätes 9 durchgeführte Verfahrensablauf ist in Figur 2 schematisch dargestellt.

In einem Schritt S1 wird eine Kalibrierung der Drehtischeinheit 6 vorgenommen; diese Kalibrierung kann zu einem beliebigen Zeitpunkt vor der Vermessung des Werkstückes erfolgen und insbesondere auch schon länger zurückliegen. Bei der Kalibrierung der Drehtischeinheit 6 wird in einem Schritt S2 die vorliegende Temperatur T der Drehtischeinheit 6 gemessen und zusammen mit den Korrekturparametern, die bei der Kalibrierung ermittelt wurden, abgespeichert.

Vor der Messung eines Werkstückes wird in einem Schritt S3 die Temperatur der Drehtischeinheit T gemessen und in einem Schritt S4 einer Abfrage unterworfen, ob die Differenz zwischen aktueller und Bezugstemperatur einen bestimmten Betrag überschreitet. Überschreitet die Differenz einen Grenzwert (Y-Verzweigung) wird vor Schritt S1 zurückgesprungen, d. h. es erfolgt eine erneute Kalibrierung im Meßsystem.

Liegt dagegen keine unzulässige Abweichung von der Bezugstemperatur vor (N-Verzweigung), wird in einem Schritt S5 das bereits hinsichtlich der zweiten Ausführungsform erwähnte Referenzobjekt vermessen. Vor der Messung des Referenzobjektes wird in Schritt S5 die Temperatur T des Drehtisches 6 erfaßt und geeignet abgelegt.

Dann folgt in einem Schritt S6 die eigentliche Messung des Werkstückes. Nach der Messung des Werkstückes wird wiederum das Referenzobjekt vermessen (Schritt S7), wobei zuvor abgefragt werden kann, ob die Temperaturabweichung einen gewissen Grenzwert überschreitet (in Figur 2 nicht dargestellt) und Schritt S7 nur dann durchgeführt wird, wenn eine gewisse Temperaturabweichung überschritten wurde.

In einem Schritt S8 wird anschließend geprüft, ob die Temperaturmessungen eine zulässige Temperaturveränderung anzeigen, d. h. ob die Temperaturänderung zwischen den Schritten S5 und S7 ein unzulässiges Maß übersteigt. Alternativ können auch die Messungen der Referenzobjekte herangezogen werden, d. h. wird geprüft, ob zwischen den Meßergebnissen der zweimaligen Messung des Referenzobjektes eine bestimmte Mindestabweichung unterschritten wird. Ist dies der Fall (Y-Verzweigung) ist die Messung des Werkstückes, beendet, da eine Korrektur nicht mehr erforderlich ist. Andernfalls (N-Verzweigung) erfolgt in einem Schritt S10 eine Korrektur der Meßwerte des Werkstückes, wobei die in den Schritten S5 und S7 durchgeführten Messungen des Referenzobjektes berücksichtigt werden.

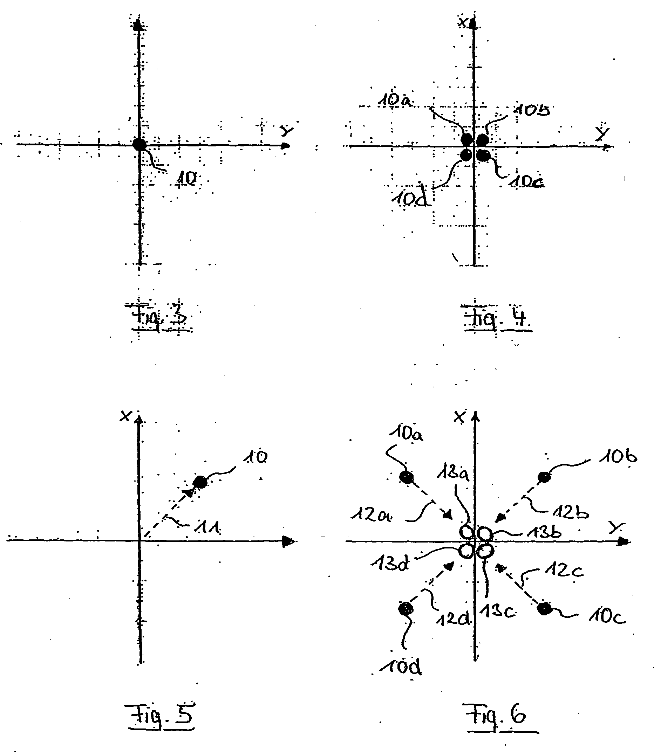

Die Figuren 3 und 4 zeigen beispielhafte Meßwerte bei der Erfassung des Referenzobjektes vor der Vermessung des Werkstückes in Schritt S6. Die Figuren 5 und 6 geben die entsprechenden Meßwerte der zweiten Erfassung des Referenzobjektes in Schritt S7 wieder. In allen Figuren ist zur Vereinfachung eine zweitdimensionale Auftragung von Meßpunkten in einem x/y-Koordinatensystem wiedergegeben. Natürlich ist dieses Koordinatensystem nur beispielhaft zu verstehen.

Figur 3 zeigt einen Meßpunkt 10, der bei der Vermessung des Referenzobjektes in Schritt S5 ohne Betätigung des Drehtisches gewonnen wurde. Figur 4 zeigt vier Meßpunkte 10a, 10b, 10c und 10d, die durch viermalige Antastung des Referenzobjektes bei Betätigung der Drehtischeinheit 6 gewonnen wurden, wobei für den Meßpunkt 10a die Winkelstellung des Drehtellers 0°, bei Meßpunkt 10b 90°, bei Meßpunkt 10c 180° und bei Meßpunkt 10d 270° betrug.

Figur 5 zeigt eine der Figur 3 analoge Darstellung der Messung in Schritt S7 ohne Betätigung des Drehtisches. Wie zu sehen ist, ist der Meßpunkt 10 um eine translatorische Abweichung 11 im Koordinatensystem verschoben. Aus dem Vergleich zwischen der Messung der Figur 3 und der Figur 5 ergibt sich automatisch die translatorische Korrektur 11, die auf die Meßwerte anzuwenden ist. Da die Messung der Figur 3 den Zustand vor der Vermessung des Werkstückes wiedergibt, und die Messung der Figur 5 die Bedingungen nach dem Vermessen des Werkstückes enthalten, wird vorteilhafterweise nicht die volle translatorische Abweichung 11 bei der Korrektur berücksichtigt, sondern nur die Hälfte davon, da dies dem Mittelwert der translatorischen Abweichung während der Vermessung des Werkstückes am nächsten kommt.

Figur 6 zeigt die Erfassung des Referenzobjektes mit Betätigung der Drehtischeinheit 6, wobei wiederum zu entsprechenden Winkelstellungen 0° / 90° / 180° / 270° Meßpunkte 10a / 10b / 10c / 10d erhalten wurden. Wie durch die Messung vor der Erfassung des Werkstückes bekannt war (vgl. Figur 4), sind die Meßpunkte 10a bis 10d durch Korrekturen 12a bis 12d zu korrigierten Daten 13a bis 13d zu berichtigen. Die Korrekturen 12a bis 12d beschreiben die systematischen winkelabhängigen Abweichungen des Drehtisches und sind im Gegensatz zur translatorischen Abweichung von der Winkelstellung abhängig. Da die Korrekturen 12a bis 12d wiederum den Korrekturbedarf zum Ende der Messung des Werkstückes anzeigen, wird auch hier, um sich an den Mittelwert anzunähem, nur die Hälfte einer jeden Korrektur 12a bis 12d berücksichtigt.

Die Korrekturen 12a bis 12d (die nur zur Veranschaulichung in Figur 6 gleich groß gezeichnet sind, in Wirklichkeit jedoch regelmäßig unterschiedlich ausfallen werden) dienen zur Korrektur der Meßwerte. Dazu kann entweder im jeweiligen Quadranten, der eine Korrektur 12a bis 12d zugeordnet ist, der entsprechende Korrekturwert durchgängig angewendet werden, oder eine entsprechende Kreis- oder Polynomnäherung durch die Meßpunkte 10a bis 10d beziehungsweise die Meßpunkte, die dem halben Korrekturbedarf entsprechen, gelegt werden, um für jede Winkelstellung den erforderlichen Korrekturwert hinsichtlich der rotatorischen Abweichung zu erhalten.

Die derart gewonnenen Korrekturwerte hinsichtlich translatorischer und rotatorischer Abweichung werden dann in Schritt S10 auf die Meßwerte, die bei der Vermessung des Werkstückes in Schritt S6 erhalten wurden, angewendet.

## Patentansprüche

1. Verfahren zum geometrischen Vermessen eines Werkstückes, wobei ein Koordinatenmessgerät (1) und ein Drehtisch (6) verwendet werden, mit dem Koordinatenmessgerät (1) bei der Vermessung eine Raumform des auf dem Drehtisch (6) angeordneten Werkstücks abgefühlt und der Drehtisch (6) kalibriert wird, **dadurch gekennzeichnet, dass** eine bei der Kalibrierung vorliegende Temperatur des Drehtisches (6) als Bezugstemperatur abgespeichert wird, vor der Vermessung des Werkstückes die Temperatur des Drehtisches (6) erneut erfasst wird und bei einer einen Grenzwert überschreitenden Temperaturabweichung zwischen der erneut erfassten Temperatur und der Bezugstemperatur vor der Vermessung des Werkstückes eine nochmalige Kalibrierung des Drehtisches (6) vorgenommen wird, wobei in der Kalibrierung Prüfkörper vermessen werden.

2. Verfahren zum geometrischen Vermessen eines Werkstückes, wobei ein Koordinatenmessgerät (1) und ein Drehtisch (6) verwendet werden, mit dem Koordinatenmessgerät (1) bei der Vermessung eine Raumform des auf dem Drehtisch (6) angeordneten Werkstücks abgefühlt und dabei Messwerte erzeugt werden, **dadurch gekennzeichnet, dass** ein auf dem Drehtisch (6) befindliches Referenzobjekt mit dem Koordinatenmessgerät (1) vor der Vermessung des Werkstückes abgefühlt wird, dann das Werkstück vermessen wird, wobei die Temperatur des Drehtisches (6) vor und nach der Vermessung des Werkstückes ermittelt wird und bei einer Temperaturänderung oberhalb eines Schwellwertes das Referenzobjekt nochmals abgefühlt, und mittels der Abfühlung des Referenzobjektes vor und nach Vermessung des Werkstückes eine Korrektur der Messwerte des Werkstückes vorgenommen wird.

3. Verfahren nach Anspruch 2, **dadurch gekennzeichnet, dass** das Referenzobjekt vor und nach Vermessung des Werkstückes jeweils mit und ohne Betätigung des Drehtisches (6) abgefühlt wird, wobei aus den Messwerten bei der Abfühlung ohne Drehtisch-Betätigung eine Korrektur für eine translatorische Abweichung und aus den Messwerten bei der Abfühlung mit Drehtisch-Betätigung eine Korrektur für eine radiale Abweichung oder eine Taumelabweichung bestimmt werden.

4. Verfahren nach einem der Ansprüche 2 oder 3, **dadurch gekennzeichnet, dass** das Referenzobjekt ein Element des Werkstückes ist.

5. Verfahren nach einem der Ansprüche 2 oder 3, **dadurch gekennzeichnet, dass** das Referenzobjekt ein an einem Werkstückträger angebrachter Prüfkörper ist.

6. Verfahren nach den Ansprüchen 1 und 2, **dadurch gekennzeichnet, dass** der Schwellwert kleiner ist als der Grenzwert und bei einer den Schwellwert überschreitenden Temperaturänderung mittels der Abfühlung des Referenzobjektes vor und nach Vermessung des Werkstückes die Korrektur der Messwerte des Werkstückes vorgenommen wird und bei einer den Grenzwert überschreitenden Temperaturabweichung vor der Messung des Werkstückes die nochmalige Kalibrierung des Drehtisches vorgenommen wird.

7. Messsystem zum geometrischen Vermessen eines Werkstücks, wobei das Messsystem ein Koordinatenmessgerät (1) und einen Drehtisch (6) aufweist, **dadurch gekennzeichnet, dass** das Koordinatenmessgerät (1) ein Steuergerät (9) aufweist, das ausgebildet ist, ein Verfahren gemäß einem der Ansprüche 1 bis 6 auszuführen.

## Claims

1. Method for geometrically measuring a workpiece, wherein a coordinate measuring device (1) and a turntable (6) are used, a spatial shape of the workpiece disposed on the turntable (6) is scanned with the coordinate measuring device (1) during measuring and the turntable (6) is calibrated, **characterised in that** a temperature of the turntable (6) is stored as a reference temperature during calibration, the temperature of the turntable (6) is recorded again prior to measuring the workpiece and a further calibration of the turntable (6) is performed prior to measuring the workpiece if the temperature deviation between the rerecorded temperature and the reference temperature exceeds a limit value, wherein test blocks are measured in the calibration.

2. Method for geometrically measuring a workpiece, wherein a coordinate measuring device (1) and a turntable (6) are used, a spatial shape of the workpiece disposed on the turntable (6) is scanned with the coordinate measuring device (1) during measuring and measured values are generated in the process, **characterised in that** a reference object placed on the turntable (6) is scanned with the coordinate measuring device (1) prior to measuring the object, then the workpiece is measured, wherein the temperature of the turntable (6) is determined before and after measuring the workpiece and the reference object is scanned again if there is a temperature change above the threshold value, and a correction of the workpiece's measured values is performed by scanning the reference object before and after measuring the workpiece.

3. Method according to claim 2, **characterised in that** the reference object is scanned before and after measuring the workpiece in each case with and without activating the turntable (6), wherein a correction for a translational deviation is determined from the measured values during scanning without turntable activation and a correction for a radial deviation or an axial runout deviation is determined from the measured values during scanning with turntable activation.

4. Method according to one of claims 2 or 3, **characterised in that** the reference object is an element of the workpiece.

5. Method according to one of claims 2 or 3, **characterised in that** the reference object is a test block attached to a workpiece carrier.

6. Method according to claims 1 and 2, **characterised in that** the threshold value is smaller than the limit value and, in the event of a temperature change exceeding the threshold value, correction of the measured values is performed by scanning the reference object before and after measuring the workpiece and, in the event of a temperature deviation exceeding the limit value, the turntable is recalibrated prior to measuring the workpiece.

7. Measuring system for geometrically measuring a workpiece, wherein the measuring system has a coordinate measuring device (1) and a turntable (6), **characterised in that** the coordinate measuring system (1) has a control unit (9) which is designed to execute a method according to one of claims 1 to 6.

## Revendications

1. Procédé pour le mesurage géométrique d'une pièce à traiter, un appareil de mesure des coordonnées (1) et un plateau rotatif (6) étant utilisés, au cours du mesurage, ledit appareil de mesure des coordonnées (1) balaye une forme spatiale de ladite pièce disposée sur le plateau rotatif (6) et calibre le plateau rotatif (6), **caractérisé en ce qu'**une température du plateau rotatif (6), présente au moment du calibrage, est mémorisée en tant que température de référence, la température du plateau rotatif (6) est enregistrée à nouveau avant le mesurage de ladite pièce et dans le cas d'un écart de température, supérieur à une valeur limite, entre la température nouvellement enregistrée et la température de référence, un nouveau calibrage du plateau rotatif (6) est effectué avant le mesurage de ladite pièce, un corps d'essai étant mesuré dans le calibrage.

2. Procédé pour le mesurage géométrique d'une pièce à traiter, un appareil de mesure des coordonnées (1) et un plateau rotatif (6) étant utilisés, au cours du mesurage, ledit appareil de mesure des coordonnées (1) balaye une forme spatiale de ladite pièce disposée sur le plateau rotatif (6) et, à cette occasion, génère des valeurs de mesure, **caractérisé en ce qu'**un objet de référence situé sur le plateau rotatif (6) est balayé par l'appareil de mesure des coordonnées (1) avant le mesurage de ladite pièce, puis la pièce à traiter est mesurée, la température du plateau rotatif (6) étant déterminée avant et après le mesurage de ladite pièce et dans le cas d'une variation de la température supérieure à une valeur seuil, l'objet de référence est à nouveau balayé, et une correction des valeurs de mesure de la pièce est effectuée au moyen du balayage de l'objet de référence avant et après le mesurage de la pièce.

3. Procédé selon la revendication 2, **caractérisé en ce que** l'objet de référence est balayé respectivement avant et après le mesurage de la pièce à traiter avec et sans actionnement du plateau rotatif (6), une correction pour un écart dû à un mouvement en translation étant déterminée à partir des valeurs de mesure lors du balayage sans actionnement du plateau rotatif (6), et une correction pour un écart dû à un mouvement radial ou un écart dû à un mouvement oscillant étant déterminée à partir des valeurs de mesure lors du balayage avec actionnement du plateau rotatif (6).

4. Procédé selon la revendication 2 ou 3, **caractérisé en ce que** l'objet de référence est un élément de la pièce à traiter.

5. Procédé selon la revendication 2 ou 3, **caractérisé en ce que** l'objet de référence est un corps d'essai posé sur un porte-pièce.

6. Procédé selon les revendications 1 et 2, **caractérisé en ce que** la valeur seuil est inférieure à la valeur limite et, dans le cas d'une variation de la température supérieure à la valeur seuil, la correction des valeurs de mesure de la pièce à traiter est effectuée au moyen du balayage de l'objet de référence avant et après le mesurage de ladite pièce à traiter, et dans le cas d'un écart de température supérieur à la valeur limite, le calibrage réitéré du plateau rotatif est effectué avant le mesurage de ladite pièce.

7. Système de mesure pour le mesurage géométrique d'une pièce à traiter, ledit système de mesure comportant un appareil de mesure des coordonnées (1) et un plateau rotatif (6), **caractérisé en ce que** l'appareil de mesure des coordonnées (1) comporte un appareil de commande (9) qui est conçu pour exécuter un procédé selon l'une quelconque des revendications 1 à 6.
